Europäisches Patentamt

European Patent Office

Office européen des brevets

(11) Publication number: **0 039 549**
**B1**

# EUROPEAN PATENT SPECIFICATION

(45) Date of publication of patent specification: **20.02.85**

(51) Int. Cl.⁴: **G 01 N 27/46**

(21) Application number: **81301715.9**

(22) Date of filing: **16.04.81**

(54) **Method of checking the responsiveness of detection systems employing electrochemical sensor.**

(30) Priority: **02.05.80 GB 8014846**

(43) Date of publication of application:
**11.11.81 Bulletin 81/45**

(45) Publication of the grant of the patent:
**20.02.85 Bulletin 85/08**

(84) Designated Contracting States:
**BE DE FR GB IT NL SE**

(56) References cited:
**DE-B-2 506 360**
**FR-A-2 138 766**
**US-A-4 077 861**
**US-A-4 090 924**

(73) Proprietor: **IMPERIAL CHEMICAL INDUSTRIES PLC**
**Imperial Chemical House Millbank**
**London SW1P 3JF (GB)**

(72) Inventor: **Bamford, Robert Anthony**
**48 Manor Road Woolton**
**Liverpool 25 (GB)**
Inventor: **Clarke, John Robin Paul**
**13 Old Wool Lane**
**Cheadle Hulme Cheshire (GB)**
Inventor: **Farr, Thomas Frederick**
**8 Rainford Avenue**
**Timperley Cheshire (GB)**

(74) Representative: **Oldroyd, Alan et al**
**Imperial Chemical Industries PLC Legal**
**Department: Patents PO Box 6 Bessemer Road**
**Welwyn Garden City Herts, AL7 1HD (GB)**

Courier Press, Leamington Spa, England.

## Description

This invention relates to a method for carrying out a rapid and reliable check upon a detection system employing an electrochemical sensor to determine whether or not the sensor is responsive to the substance to which it is intended to respond and whether or not the electrical circuitry is intact.

Electrochemical sensors are used extensively in industry for detecting and monitoring components of fluids, especially gases. For example such sensors are employed for detection and monitoring of hazardous and toxic gases in breathable atmospheres, e.g. chlorine, chlorine dioxide, nitrogen dioxide and ozone. They are also used in process gas streams. Several types of electrochemical sensors are known based on the principle of causing the substance to be detected to react with an electrolyte in contact with electrodes across which an electric current flows in response to a change in the electrolyte induced by the substance to be detected.

Electrochemical devices may be of the flowing reagent or the static-reagent types.

In static-reagent sensors the reagent or electrolyte is static relative to the electrodes and in flowing-reagent sensors the reagent or electrolyte flows continuously over the surfaces of the electrodes. In some sensors no potential is applied across the electrodes so that in the absence of the substance to be detected little if any electric current flows through the electrode circuit. In other sensors a small standing potential below the decomposition potential of the electrolyte, for example 0.6 volt, is applied across the electrodes so that even in the absence of the substance to be detected a small electric current flows through the electrode circuit; a sensor of this type is described in United Kingdom Patent Specification No. 1,552,620. In either case a change in the electrolyte induced by the substance to be detected causes an increased small and measurable electric current to flow through the electrode circuit.

Irrespective to the type of electrochemical sensor employed, it is advisable to carry out frequent routine checks upon the detection system to determine that the system is capable of responding to the substance to be detected. This involves checking that the electrical circuitry is functioning correctly and that the sensor is capable of responding rapidly and correctly to the substance to be detected. Electrochemical sensors are well known to be prone to being rendered insensitive and incapable of proper response by a variety of things, notably by improper contact between the electrodes and the electrolyte as may be caused for example by drying-out of the sensor or in the case of flowing-reagent devices by failure of the reagent-supply apparatus.

Hitherto this checking of detection systems has involved a visit to the sensor and introduction directly to the sensor of the substance to be detected. For instance in the case of chlorine gas sensors for detecting chlorine in the atmosphere, the check has involved a visit to the site of the sensor and the introduction to the sensor of a dilute chlorine gas stream usually generated as required from a hypochlorite/hydrochloric acid mixture. This check method has the obvious disadvantages of being a lengthy operation requiring the employment of skilled instrument technicians, of perhaps requiring the travelling (often in inclement weather conditions) of appreciable distances for example where several sensors are located in multi-point systems spread over a large area, of requiring introduction of gas to sensors located in inaccessible locations and of creating a minor potential toxicity hazard to the operator associated with the generation and release of a toxic gas for carrying out the test.

The present invention is concerned with a check method for determining the response of the detection system which obviates all of the above disadvantages.

According to the present invention there is provided a method of carrying out a check upon the responsiveness of a detection system employing electrochemical sensor of the type comprising electrodes in contact with an electrolyte which is capable of reacting with a substance to be detected to induce a change in the electrolyte thereby causing an electric current to flow between the electrodes, the method comprising inducing an electric current to flow between the electrodes by applying across them at least one pulse of potential and noting the response of the detection system to the induced electric current, characterised in that said at least one pulse of potential, which is applied in the absence of the substance to be detected, is greater than the decomposition potential of the electrolyte to induce a change in the electrolyte corresponding to the change induced by the substance to be detected. The electric current flowing between the electrodes as a result of applying the pulse of potential may be in the same direction as the standing current in the sensor or induced by the substance to be detected, or it may be and preferably is in the reverse direction.

Polarisation of the electrodes of a transcutaneous oxygen detector by applying potential across the electrodes of a polargraphic detector is described in DE—B—2,506,360.

If the detection system fails to respond to the induced change in the electrolyte or if the response is barely noticeable, then there is a fault in the detection system. The fault may be in the electrical circuitry or, more probably, in the electrochemical sensor and identification and rectification of the fault is required. However if the system responds normally to the induced change in the electrolyte then the system is functioning properly and can be relied upon to perform its intended function.

By the term "decomposition potential of the electrolyte" there is meant the potential which when applied across the electrodes of the sensor results in electrolysis of the electrolyte salt and induces a change, notably the release in the electrolyte of an oxidised species which is subsequently reduced on the sensing electrode. Thus for example in the case where the electrolyte is an aqueous solution of an iodide or bromide salt, the decomposition potential is the potential which when applied across the electrodes of the sensor results in the liberation of iodine or bromine respectively in the electrolyte with a resulting surge in the electric current flowing between the electrodes.

The potential applied momentarily across the electrodes of the sensor may be a direct or alternating potential. In the latter case the alternating potential is preferably low frequency. However, for convenience of measuring/noting the response of the detection system, we much prefer to employ a direct potential. A simple check that the detection system and especially the electrochemical sensor is functioning properly can be provided by applying a single large pulse or a series of small pulses of predetermined charge across the electrodes of the sensor.

Depending upon the frequency of application of pulses across the electrodes, the check may be an irregular "as required" check of the system or a permanent check of the system. Thus for example a single large pulse or a short series of small pulses may be applied in response to operation of a switch such as a push-button by an operator to provide a rapid check on the system as and when the operator chooses. Alternatively small pulses may be applied automatically at predetermined intervals of say one or a few seconds such that a permanent check is available as to the functionality of the detection system. In the latter case there may be a substantially constant or at least a regular movement of the pointer of a meter in the detection circuit indicating to the operator that the system is functioning correctly.

Generation of the pulse or pulses of potential applied across the electrodes of the sensor can be effected in any known manner. Thus, for example, direct potential pulses can be generated by discharge of a capacitor or using a monostable relay or time delay unit. It will be appreciated that the pulse-application circuit is separate from the detection circuit in order that the response of the detection system is solely due to changes in the electrolyte of the sensor induced (a) by the pulse(s) and (b) by the substance to be detected.

The invention will now be illustrated by way of example only with reference to the accompanying drawing which shows the electrical circuitry in an amperometric detection system employing an electrochemical sensor of the static reagent type comprising two platinum electrodes in contact with an electrolyte which is an aqueous solution of calcium bromide. The sensor may be, for example, as in United Kingdom Patent Specification No. 1,552,620.

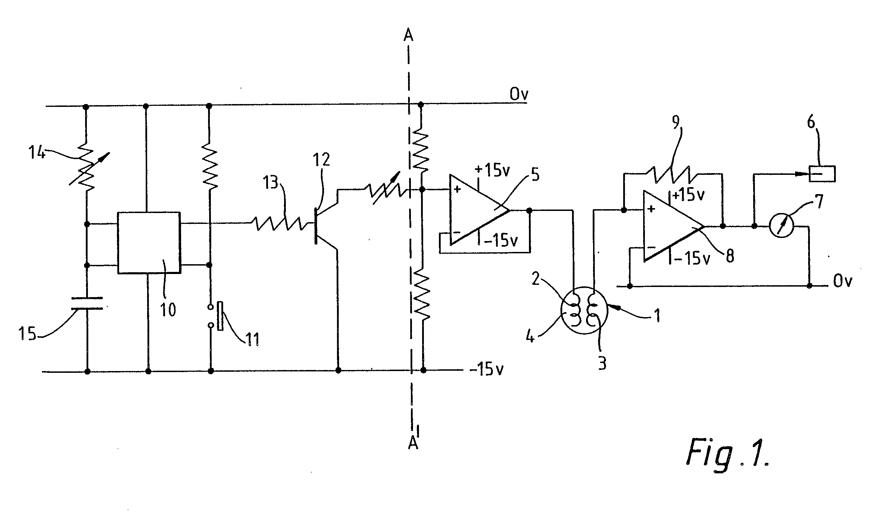

Referring to Figure 1, the electrical circuit comprising the detection system is shown to the right of the line A—A' whilst the electrical circuit for pulse-generation is shown to the left of line A—A'. In the detection circuit the sensor 1 (shown schematically) comprises platinum electrodes 2 and 3 in contact with an electrolyte 4 comprising an aqueous solution of calcium bromide. Electrode 2 is connected to an amplifier 5 which is a source of constant potential and electrode 3 is connected to an alarm unit 6 and an ammeter 7 through amplifier 8 and resistor 9 which converts the sensor current to a voltage signal. In operation, the potential applied to electrode 2 is of the order of 600 millivolt and the amplifier 8 and resistor 9 is designed to produce an output signal of 1 to 5 volts for feeding to the ammeter 7 and alarm unit 6.

The pulse-generation circuit employs a time delay unit 10 which creates a pulse of direct potential in response to depression of a push-button 11. Upon depression of push-button 11 a transistor 12 is turned on by electric current fed from time delay unit 10 via a resistor 13. This increases the potential applied to electrode 2 of the sensor 1 and the subsequent surge in electric current is detected by ammeter 7 and alarm unit 6. After a predetermined time interval, determined by a variable resistor 14 and a capacitor 15, transistor 12 is deactivated. Thus depression of push-button 11 induces a single pulse of potential which is applied across electrodes 2 and 3 of the sensor in the same direction as the small standing potential across these electrodes.

It will readily be appreciated that instead of push-button 11 for generation of a single pulse for application across electrodes 2 and 3, there may be provided automatic pulse generation for providing small pulses at predetermined intervals of for example one or a few seconds. The duration of each pulse may be selected as required to provide a small but noticeable response in the detection system, for example a few milliseconds. In the case of frequent regular pulse generation the pointer of the ammeter may swing more or less constantly in the lower region of the meter scale, thus providing the operator with an essentially permanent check on the correct functioning of the detection system.

If desired both a regular automatic generation of small pulses and a manual (push-button) generation of a large pulse may be provided for in the pulse-generation circuitry.

Instead of applying the increased potential in the same direction as the small standing potential across the electrodes, the increased potential may be applied in the reverse direction.

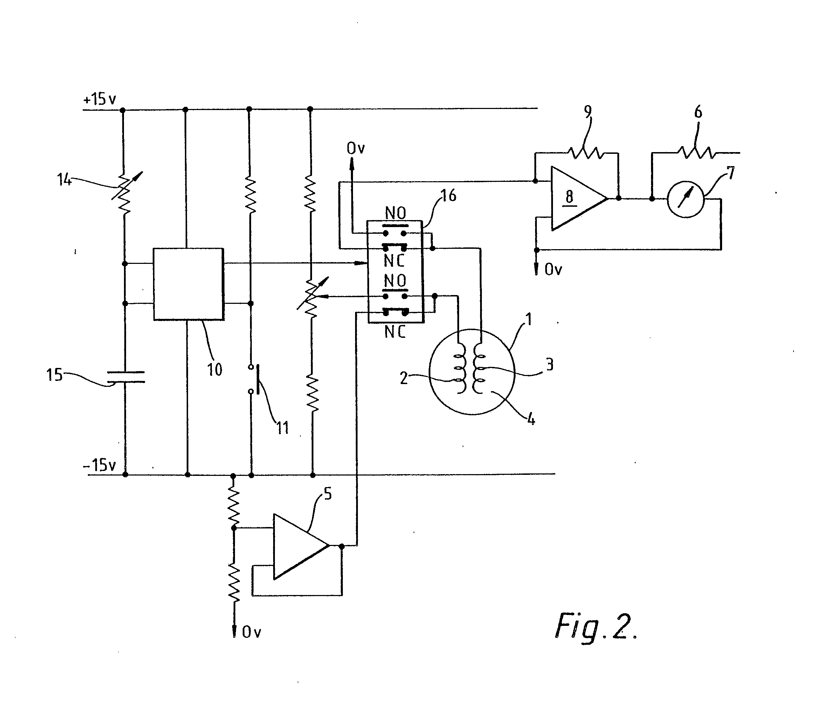

A suitable circuit is shown schematically in Figure 2 of the drawings in which like parts to those shown in Figure 1 are denoted by the same reference numerals. The circuit includes an analogue switch 16 and the pulse-generation system is connected between +15v and −15v instead of between 0v and −15v as in Figure 1.

In the drawing analogue switch 16 is shown in the "normal" position in which the sensor is used to detect the presence of a substance. Actuation of push-button switch 11 generates a pulse of potential as described above and situates analogue switch 16 such as to isolate the detector system from the sensor and essentially simultaneously apply a pulse of potential across the electrodes 2 and 3 of the sensor. After application of the pulse for a suitable time, for example a few milliseconds, the analogue switch 16 reverts to the normal position and the detection system registers the change induced by the pulse in the electrolyte of the sensor.

## Claims

1. A method of carrying out a check upon the responsiveness of a detection system employing an electrochemical sensor of the type comprising electrodes in contact with an electrolyte which is capable of reacting with a substance to be detected to induce a change in the electrolyte thereby causing an electric current to flow between the electrodes, the method comprising inducing an electric current to flow between the electrodes by applying across them at least one pulse of potential and noting the response of the detection system to the induced electric current, characterized in that said at least one pulse of potential, which is applied in the absence of the substance to be detected, is greater than the decomposition potential of the electrolyte to induce a change in the electrolyte corresponding to the change induced by the substance to be detected.

2. A method as claimed in Claim 1 characterized in that a series of pulses of potential is applied across the electrodes.

3. A method as claimed in Claim 1 or Claim 2 characterized in that the at least one pulse is applied in response to operation of a switch.

4. A method as claimed in Claim 1 or Claim 2 characterized in that the at least one pulse is applied automatically at predetermined intervals of time, following the first at least one pulse.

5. A method as claimed in any one of the preceding claims characterized in that the electric current is a direct current.

## Patentansprüche

1. Verfahren zum Überprüfen des Ansprechens eines Detektors, der einen elektrochemischen Fühler mit Elektroden aufweist, die sich mit einem Elektrolyt in Berührung befinden, der mit einem festzustellenden Stoff reagieren kann, wobei eine Änderung im Elektrolyt und damit ein elektrischer Stromfluß zwischen den Elektroden hervorgerufen wird, bei welchem Verfahren durch Anlegen mindestens eines Spannungsimpulses an die Elektroden ein elektrischer Stromfluß zwischen diesen erzeugt und das Ansprechen des Detektors auf den erzeugten elektrischen Strom festgestellt wird, dadurch gekennzeichnet, daß der oder die Spannungsimpulse, der oder die in Abwesenheit des festzustellenden Stoffs angelegt werden, größer als das Zersetzungspotential des Elektrolyts sind, wodurch eine Änderung im Elektrolyt hervorgerufen wird, die der Änderung entspricht, die durch den festzustellenden Stoff veranlaßt wird.

2. Verfahren nach Anspruch 1, dadurch gekennzeichnet, daß eine Reihe von Spannungsimpulsen an die Elektroden angelegt wird.

3. Verfahren nach Anspruch 1 oder 2, dadurch gekennzeichnet, daß der oder die Impulse durch Betätigung eines Schalters angelegt werden.

4. Verfahren nach Anspruch 1 oder 2, dadurch gekennzeichnet, daß im Anschluß an den ersten Impuls oder die ersten Impulse in vorbestimmten Zeitabständen automatisch ein weiterer Impuls oder weitere Impulse angelegt werden.

5. Verfahren nach einem der vorhergehenden Ansprüche, dadurch gekennzeichnet, daß der elektrische Strom Gleichstrom ist.

## Revendications

1. Procédé pour effectuer un contrôle sur la sensibilité d'un système de détection utilisant un capteur électrochimique du type comprenant des électrodes en contact avec un électrolyte qui est capable de réagir avec une substance à détecter de façon à induire un changement dans l'électrolyte provoquant ainsi la circulation d'un courant électrique entre les électrodes, le procédé consistant à induire la circulation d'un courant électrique entre les électrodes en appliquant entre elles au moins une impulsion de potentiel et à noter la réponse du système de détection au courant électrique induit, caractérisé en ce que ladite impulsion de potentiel, qui est appliquée en l'absence de la substance à détecter, est supérieure au potentiel de décomposition de l'électrolyte afin d'induire un changement dans l'électrolyte correspondant au changement induit par la substance à détecter.

2. Procédé selon la revendication 1, caractérisé en ce qu'une série d'impulsions de potentiel est appliquée entre les électrodes.

3. Procédé selon la revendication 1 ou la revendication 2, caractérisé en ce que ladite impulsion est appliquée en réponse à l'actionnement d'un interrupteur.

4. Procédé selon la revendication 1 ou la revendication 2, caractérisé en ce que ladite impulsion est appliquée automatiquement à intervalles de temps prédéterminés, après la première impulsion.

5. Procédé selon l'une quelconque des revendications précédentes, caractérisé en ce que le courant électrique est un courant continu.

**Fig. 1.**

Fig. 2.